# EUROPEAN PATENT APPLICATION

(11) **EP 4 475 252 A1**
(43) Date of publication of application: **11.12.2024**
(21) Application number: 22926906.3
(22) Date of filing: 28.12.2022
(51) Int. Cl.: H01M 10/0525

(54) **BATTERY CELL, BATTERY, ELECTRICAL DEVICE, AND MANUFACTURING METHOD**

(30) Priority: 17.02.2022 CN 202210147969
(71) Applicant: Contemporary Amperex Technology (Hong Kong) Limited, Central, Central And Western District (HK)
(72) Inventor: WU, Yiyang, Ningde, Fujian 352100 (CN); YE, Yonghuang, Ningde, Fujian 352100 (CN); WU, Kai, Ningde, Fujian 352100 (CN)
(74) Representative: Herrmann, Uwe
(86) International application number: PCT/CN2022/143063
(87) International publication number: WO 2023/155609

(57) **Abstract**

This application provides a battery cell, a battery, an electric device, and a manufacturing method. The battery cell includes: a shell, having an accommodating cavity; and at least two electrode assemblies, located in the accommodating cavity. Any one of the at least two electrode assemblies includes a main body portion and a first tab and second tab extending from the main body portion and having opposite polarities. The battery cell includes a first side and a second side oppositely arranged in a height direction of the battery cell. The at least two electrode assemblies include a first electrode assembly and a second electrode assembly. The main body portion of the first electrode assembly has the first tab and the second tab extending from the first side and the first tab extending from the second side. The main body portion of the second electrode assembly has the second tab extending from the first side and the first tab extending from the second side. In the first electrode assembly and the second electrode assembly, the two second tabs located on the first side are electrically connected to each other, and the two first tabs located on the second side are electrically connected to each other. This application can improve safety performance of the battery cell.

## Description

### CROSS-REFERENCE TO RELATED APPLICATIONS

This application claims priority to Chinese Patent Application No. 202210147969.6, filed on February 17, 2022 and entitled "BATTERY CELL, BATTERY, ELECTRIC DEVICE, AND MANUFACTURING METHOD", which is incorporated herein by reference in its entirety.

### TECHNICAL FIELD

This application relates to the field of batteries, and in particular, to a battery cell, a battery, an electric device, and a manufacturing method.

### BACKGROUND

Energy conservation and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

To produce a high-capacity battery cell, more than two electrode assemblies are typically arranged in the battery cell, and the more than two electrode assemblies are connected in parallel. However, when a plurality of electrode assemblies are arranged in a battery cell, the plurality of electrode assemblies generate a large amount of heat, and safety problems may be caused in the battery cell due to insufficient heat dissipation.

### SUMMARY

In view of the preceding problem, this application provides a battery cell, a battery, an electric device, and a manufacturing method, aiming to improve the heat dissipation performance of the battery cell and thus enhance the safety performance of the battery cell.

According to a first aspect, this application provides a battery cell including: a shell, having an accommodating cavity; and at least two electrode assemblies, located in the accommodating cavity, where any one of the at least two electrode assemblies includes a main body portion and a first tab and second tab extending from the main body portion and having opposite polarities. The battery cell includes a first side and a second side oppositely arranged in a height direction of the battery cell, the at least two electrode assemblies include a first electrode assembly and a second electrode assembly, the main body portion of the first electrode assembly has the first tab and the second tab extending from the first side and the first tab extending from the second side, the main body portion of the second electrode assembly has the second tab extending from the first side and the first tab extending from the second side, and in the first electrode assembly and the second electrode assembly, the two second tabs located on the first side are electrically connected to each other, and the two first tabs located on the second side are electrically connected to each other.

In the technical solutions of the embodiments of this application, the battery cell includes the shell and the electrode assemblies located in the accommodating cavity of the shell. The electrode assemblies include the first electrode assembly and the second electrode assembly, and the first electrode assembly and the second electrode assembly each include the first tab and the second tab. The two second tabs located on the first side are connected to each other, and the two first tabs located on the second side are connected to each other, so that the first electrode assembly and the second electrode assembly can be connected in parallel. Moreover, the connected first tabs and the connected second tabs are located on different sides of the electrode cell, which can simplify wiring, avoid the risk of short circuit between wires connecting the two first tabs and wires connecting the two second tabs, and improve the safety performance of the battery cell. In addition, the two first tabs located on the second side can communicate with the first tabs of the first electrode assembly that are located on the first side, so that the first tabs and the second tabs with opposite polarities on the battery cell can be led out from the first side of the battery cell, which can simplify the wiring of the battery cell.

In some embodiments, the shell further includes a wall portion, where the wall portion encloses the accommodating cavity and an opening communicating with the accommodating cavity and located at least on the first side; and the battery cell further includes an end cover assembly for closing the opening, where the end cover assembly includes an end cover body and a first electrode terminal and second electrode terminal arranged on the end cover body and having opposite polarities, the first electrode terminal being electrically connected to the first tab located on the first side, and the second electrode terminal being electrically connected to at least one of the two second tabs.

According to these embodiments of this application, the end cover assembly is arranged at the opening of the shell, and the first electrode terminal and the second electrode terminal are arranged on the end cover assembly, so that the first electrode terminal is connected to the first tab to lead out the first tab, and the second electrode terminal is connected to the second tab to lead out the second tab. Moreover, the opening is located on the first side, to be specific, the end cover assembly is located on the first side, which can reduce a distance between the first tab and the first electrode terminal and a distance between the second tab and the second electrode terminal on the first side.

In some embodiments, the wall portion includes a bottom arranged opposite the opening, and at least part of at least one of the first tabs located on the second side directly or indirectly abuts against the bottom.

According to these embodiments of this application, the first tab abuts against the bottom, so that heat on the first tab can be transferred to the bottom, thereby improving the heat dissipation capability of the battery cell.

In some embodiments, at least one of the two first tabs located on the second side is bent to form an abutment portion, and a surface of the abutment portion facing the bottom is a mating surface abutting against the bottom.

According to these embodiments of this application, the mating surface is formed on the abutment portion of the first tab, so that a heat dissipation area of the first tab can be increased, thereby accelerating a heat transfer rate between the first tab and the bottom, and further improving the heat dissipation capability of the battery cell.

In some embodiments, the battery cell further includes a first adapter member, where the two first tabs located on the second side are electrically connected to each other through the first adapter member.

According to these embodiments of this application, the two first tabs located on the second side can be connected by providing the first adapter member, so that the heat of the two first tabs can be transferred to the first adapter member.

In some embodiments, the first adapter member is located between the two first tabs located on the second side and the bottom, so that the mating surface abuts against the bottom through the first adapter member.

According to these embodiments of this application, the mating surface abuts against the bottom through the first adapter member, so that heat can be transferred from the first tab to the bottom through the first adapter member. Moreover, the first adapter member connects the two first tabs, so that the heat of the two first tabs can be transferred to the bottom through the first adapter member, which can further improve the heat dissipation capability of the battery cell.

In some embodiments, an insulating heat-conducting plate is provided on a side of the bottom facing the accommodating cavity, and at least part of the insulating heat-conducting plate is located between the first adapter member and the bottom so as to achieve heat conduction between the first adapter member and the bottom.

According to these embodiments of this application, the heat transfer rate between the first adapter member and the bottom can be accelerated by providing the insulating heat-conducting plate, thereby improving the heat dissipation capability of the battery cell.

In some embodiments, the insulating heat-conducting plate and the first adapter member are bonded to each other using an insulating heat-conducting adhesive. Provision of the insulating heat-conducting adhesive can ensure the stability of relative positions of the insulating heat-conducting plate and the first adapter member.

In some embodiments, the insulating heat-conducting plate and the bottom are bonded to each other using an insulating heat-conducting adhesive. The relative positional stability between the insulating heat-conducting plate and the bottom can be ensured by providing the insulating heat-conducting adhesive.

In some embodiments, the main body portion of the first electrode assembly and the main body portion of the second electrode assembly each include two first surfaces oppositely arranged and second surfaces connecting the two first surfaces and oppositely arranged, where an area of the first surface is greater than an area of the second surface, and the first electrode assembly and the second electrode assembly are arranged side by side with the second surfaces oppositely arranged.

According to these embodiments of this application, the first electrode assembly and the second electrode assembly are arranged side by side with the smaller second surfaces, so that the first surfaces are not obstructed by other electrode assemblies, and heat of the electrode assemblies can be dissipated through the first surfaces. Moreover, the first surfaces have a larger area, which can improve the heat dissipation capability of the electrode assemblies.

In some embodiments, in the first tab and the second tab of the first electrode assembly that are located on the first side, the second tab is arranged on a side of the first tab facing the second electrode assembly.

According to these embodiments of this application, the second tab of the first electrode assembly is arranged close to the second electrode assembly, so that a distance between the two second tabs located on the first side is short, facilitating the connection of the two second tabs.

In some embodiments, the first electrode assembly and the second electrode assembly are electrode assemblies formed through winding and each include a straight region and a bending region. In the two first tabs located on the second side, the first tab of the first electrode assembly is located in the straight region of the first electrode assembly, and/or the first tab of the second electrode assembly is located in the straight region of the second electrode assembly.

According to these embodiments of this application, when the first tab on the second side is located in the straight region of the first electrode assembly and/or second electrode assembly, the shape of the first tab can be ensured to be regular. In addition, when the first tab is bent to form the abutment portion, the difficulty of bending the first tab can be reduced.

In some embodiments, in the two first tabs located on the second side, width L1 of the first tab of the first electrode assembly and width L2 of the straight region of the first electrode assembly satisfy 5 mm≤L2-L1≤10 mm; and/or width L3 of the first tab of the second electrode assembly and width L4 of the straight region of the second electrode assembly satisfy 5 mm≤L4-L3≤10 mm.

According to these embodiments of this application, when the width L1 of the first tab and the width L2 of the straight region of the first electrode assembly satisfy 5 mm≤L2-L1≤10 mm, even if the first tab is offset due to process errors, it can still be ensured that the first tab is located in the straight region of the first electrode assembly. Similarly, when the width L3 of the second tab and the width L4 of the straight region of the second electrode assembly satisfy 5 mm≤L4-L3≤10 mm, even if the second tab is offset due to process errors, it can still be ensured that the second tab is located in the straight region of the second electrode assembly.

In some embodiments, the first electrode assembly and the second electrode assembly are both laminated electrode assemblies, and in the two first tabs located on the second side, width L5 of the first tab of the first electrode assembly and width L6 of the first electrode assembly satisfy 0≤L6-L5≤10 mm; and/or width L7 of the first tab of the second electrode assembly and width L8 of the second electrode assembly satisfy 0≤L8-L6≤10 mm.

According to these embodiments of this application, when L5 and L6 satisfy the foregoing ranges, the first tab can be ensured not to protrude from an overlapping region.

In some embodiments, the second electrode assembly is provided in plurality, the second tabs of all the second electrode assemblies are located on the first side and electrically connected to the second tabs of the first electrode assembly, and the first tabs of all the second electrode assemblies are located on the second side and electrically connected to the first tabs of the first electrode assembly that are located on the first side.

According to these embodiments of this application, the plurality of second electrode assemblies are arranged, which can increase the capacity of the battery cell. The second tabs of all the second electrode assemblies are connected to the second tabs of the first electrode assembly, and the plurality first tabs on the first side are connected to each other, so that the plurality of second electrode assemblies can be connected in parallel with the first electrode assembly.

In some embodiments, in the two first tabs located on the second side, an orthographic projection of the first tab of the first electrode assembly in the height direction is located within an orthographic projection of the main body portion of the first electrode assembly in the height direction, and an orthographic projection the first tab of the second electrode assembly in the height direction is located within an orthographic projection of the main body portion of the second electrode assembly in the height direction.

In these embodiments of this application, the first tab of the first electrode assembly does not protrude from a body of the first electrode assembly, and the first tab of the second electrode assembly does not protrude from a body of the second electrode assembly, which can prevent the first tab from scraping an inner wall surface of the shell facing the accommodating cavity.

In some embodiments, the first electrode assembly and the second electrode assembly each include a first electrode plate, a second electrode plate, and a separator arranged between the first electrode plate and the second electrode plate, and in the first electrode assembly and/or the second electrode assembly, in the height direction, the first tab extends from the first electrode plate and beyond the separator, and the second tab extends from the second electrode plate and beyond the separator.

According to these embodiments of this application, the first tab extends beyond the separator, and when the first tab includes a plurality of layers of slices, the electrical connection stability between the plurality of layers of slices can be ensured. Similarly, the second tab extends beyond the separator, and when the second tab includes a plurality of layers of slices, the electrical connection stability between the plurality of layers of slices can be ensured.

According to a second aspect, this application provides a battery including the battery cell according to the first aspect of this application.

According to a third aspect, this application provides an electric apparatus including the battery according to the second aspect of this application.

According to a fourth aspect, this application provides a manufacturing method of battery cell including:
preparing a first electrode assembly, where a main body portion of the first electrode assembly has a first tab and a second tab extending from a first side and a first tab extending from a second side;
preparing a second electrode assembly, where a main body portion of the second electrode assembly has a second tab extending from the first side and a first tab extending from the second side;
electrically connecting the two first tabs of the first electrode assembly and the second electrode assembly located on the second side to each other, and electrically connecting the two second tabs of the first electrode assembly and the second electrode assembly located on the first side to each other; and
placing the first electrode assembly and the second electrode assembly in the accommodating cavity of the shell.

This application provides a battery cell, a battery, an electric device, and a manufacturing method. The battery cell includes a shell and electrode assemblies located in an accommodating cavity of the shell. Two second tabs located on a first side are connected to each other, and two first tabs located on a second side are connected to each other, so that a first electrode assembly and a second electrode assembly can be connected in parallel. Moreover, the connected first tabs and the connected second tabs are located on different sides of the electrode cell, which can simplify the structure of the battery cell, avoid the risk of short circuit between a component connecting the two first tabs and a component connecting the two second tabs, and improve the safety performance of the battery cell. The connected first tabs and the connected second tabs are located on different sides of the electrode cell, so that the two can dissipate heat from different sides, which can effectively improve the heat dissipation performance of the battery cell and thus enhance the safety performance of the battery cell. In addition, the two first tabs located on the second side can communicate with the first tabs of the first electrode assembly that are located on the first side, so that the first tabs and the second tabs with opposite polarities on the battery cell can be led out from the first side of the battery cell, which can simplify the wiring of the battery cell.

The foregoing description is merely an overview of the technical solutions of this application. For a better understanding of the technical means in this application so that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application Throughout the accompanying drawings, the same reference signs represent the same components. In the accompanying drawings:
FIG. 1 is a schematic structural diagram of a vehicle according to an embodiment of this application;
FIG. 2 is a schematic structural diagram of a battery pack according to an embodiment of this application;
FIG. 3 is a schematic structural diagram of a battery module according to an embodiment of this application;
FIG. 4 is a schematic diagram of a three-dimensional structure of a battery cell according to an embodiment of this application;
FIG. 5 is a schematic diagram of a three-dimensional structure of a battery cell according to an embodiment of this application from another perspective;
FIG. 6 is a schematic structural exploded view of a battery cell according to an embodiment of this application;
FIG. 7 is a schematic structural diagram of an electrode assembly of a battery cell according to an embodiment of this application from another perspective;
FIG. 8 is a cross-sectional view of a first electrode assembly of a battery cell according to an embodiment of this application along line A-A in FIG. 7; and
FIG. 9 is a schematic flowchart of a manufacturing method of battery cell according to an embodiment of this application.

Reference signs in specific embodiments are as follows:
1. vehicle; 10. battery; 11. controller; 12. motor;
20. battery module; 200. battery cell; 210. end cover assembly; 211. end cover body; 212. first electrode terminal; 213. second electrode terminal; 220. shell, 221. accommodating cavity; 222. wall portion; 222a. bottom; 222b. side portion; 223. opening; 230. electrode assembly; 230a. first electrode assembly; 230b. second electrode assembly; 231. main body portion; 231a. first surface; 231b. second surface; 232. first tab; 232a. abutment portion; s1. mating surface; 233. second tab; 234. first electrode plate; 235. second electrode plate; 236. separator; 240. first adapter member; 250. insulating heat-conducting plate; 260. second adapter member; 270. support portion;
30. box; 301. first box portion; 302. second box portion;
A1. first side; A2. second side; Q. straight region; W. bending region;
Z. height direction; X. width direction; and Y. thickness direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples that do not constitute any limitations on the protection scope of this application.

It should be noted that, unless otherwise specified, the technical terms or scientific terms used in the embodiments of this application should have the common meanings understood by those skilled in the art to which the embodiments of this application belong.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In addition, the technical terms "first", "second", and the like are merely for the purpose of description, and shall not be understood as any indication or implication of relative importance or any implicit indication of the number of technical features indicated. In the description of the embodiments of this application, "a plurality of" means at least two unless otherwise specifically stated.

In the description of the embodiments of this application, unless otherwise specified and defined explicitly, the technical terms "mounting", "connection", "joining", and "fastening" should be understood in their general senses. For example, they may refer to a fixed connection, a detachable connection, or an integrated connection, may refer to a mechanical connection or an electrical connection, and may refer to a direct connection, an indirect connection through an intermediate medium, an internal connection between two elements, or an interaction between two elements. Persons of ordinary skill in the art can understand specific meanings of these terms in this application as appropriate to specific situations.

In the description of the embodiments of this application, unless otherwise expressly specified and defined, the first feature being "above" or "below" the second feature may mean that the first feature is in direct contact with the second feature or may mean that the first feature and the second feature come into contact indirectly through an intermediate medium. Moreover, that the first feature is "above", "over", and "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or in other shapes. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting the charge or discharge of the battery cell.

The battery cell includes an electrode assembly and an electrolyte. The electrode assembly includes a positive electrode plate, a negative electrode plate, and a separator. The battery cell works primarily relying on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode tab connected to the positive electrode current collecting portion, where the positive electrode current collecting portion is coated with the positive electrode active substance layer, and the positive electrode tab is coated with no positive electrode active substance layer. A lithium-ion battery is used as an example. The positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode tab connected to the negative electrode current collecting portion, where the negative electrode current collecting portion is coated with the negative electrode active substance layer, and the negative electrode tab is coated with no negative electrode active substance layer. The negative electrode current collector may be made of copper, the negative electrode active substance layer includes a negative electrode active substance, and the negative electrode active substance may be carbon, silicon, or the like. The separator may be made of PP (polypropylene, polypropylene), PE (polyethylene, polyethylene), or the like.

To produce a high-capacity battery cell, more than two electrode assemblies are typically arranged in the battery cell, and the more than two electrode assemblies are connected in parallel. The inventors of this application have noted that when a plurality of electrode assemblies are arranged in a battery cell, the plurality of electrode assemblies generate a large amount of heat, and safety problems may be caused in the battery cell due to insufficient heat dissipation.

To improve the heat dissipation performance and safety performance of the battery cell, the applicants have found through research that the electrode assembly includes a first tab and a second tab with opposite polarities, and the first tabs and the second tabs can be connected on different sides of the electrode assemblies, so that the connection of the plurality of first tabs and the plurality of second tabs dissipate heat on different sides of the battery cell, thereby improving the problem of heat concentration in the battery cell and enhancing the heat dissipation performance and safety performance of the battery cell.

Based on the above considerations, the inventors have conducted in-depth research and designed a battery cell. The battery cell includes a first side and a second side oppositely arranged in a height direction. The electrode assembly includes a first tab and a second tab with opposite polarities, and a plurality of electrode assemblies each have a second tab extending from the first side and a first tab extending from the second side. The second tabs of the plurality of electrode assemblies are connected on the first side, and the first tabs of the plurality of electrode assemblies are connected on the second side.

In such a battery cell, the plurality of second tabs located on the first side are connected to each other, and the plurality of first tabs located on the second side are connected to each other, so that a first electrode assembly and a second electrode assembly can be connected in parallel. Moreover, the connected first tabs and the connected second tabs are located on different sides of the electrode cell, so that the connection of the plurality of first tabs and the plurality of second tabs dissipate heat on different sides of the battery cell simultaneously, thereby improving the problem of heat concentration in the battery cell and enhancing the heat dissipation performance and safety performance of the battery cell.

In addition, the inventors have found that for prismatic batteries, to prepare high-capacity single batteries, more than two electrode assemblies are typically arranged in the battery cell. When the electrode assemblies are stacked along a thickness direction, the overall thickness of a single battery is too large, which is not conducive to heat dissipation, reduces the battery life, and increases safety risks. As length or width of a single electrode assembly is increased, the production speed and yield rate is affected by the excessive stroke in the preparation process of the electrode assembly, and difficulties in the absorption of the electrolyte by the electrode assembly is caused, leading to safety problems such as lithium precipitation. Therefore, this application proposes a long and thin high-capacity single battery, where more than two electrode assemblies are arranged side by side in a length or width direction and connected in parallel, which not only can meet the demand for the high-capacity single battery, but also can effectively improve the heat dissipation effect of the single battery.

The technical solutions described in the embodiments of this application are applicable to batteries and electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a stationary or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

It should be understood that the technical solutions described in the embodiments of this application are not only applicable to the batteries and electric devices described above, but also applicable to all batteries including a box and electric devices using batteries. However, for the brevity of description, in the following embodiments, an electric vehicle is used as an example for description.

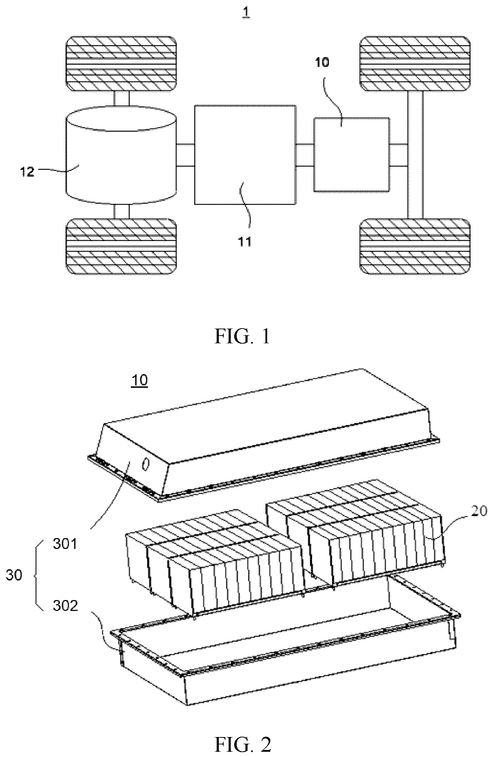

Referring to FIG, 1. FIG. 1 is a schematic structural diagram of a vehicle 1 according to some embodiments of this application. The vehicle 1 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1 is provided with a battery 10 inside, where the battery 10 may be arranged at the bottom, front, or rear of the vehicle 1. The battery 10 may be configured to supply power to the vehicle 1. For example, the battery 10 may be used as an operational power supply for the vehicle 1. The vehicle 1 may further include a controller 11 and a motor 12, where the controller 11 is configured to control the battery 10 to supply power to the motor 12, for example, to satisfy power needs of start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

To meet different power usage needs, the battery 10 may include a plurality of battery cells, where the battery cell is the smallest unit that constitutes a battery module or a battery pack. The plurality of battery cells can be connected in series and/or in parallel through electrode terminals for various application scenarios. The battery mentioned in this application includes a battery module or a battery pack. The plurality of battery cells may be connected in series, parallel, or series-parallel, where being connected in series-parallel means a combination of series and parallel connections. In these embodiments of this application, the plurality of battery cells directly constitute a battery pack, or may first constitute battery modules, and then the battery modules constitute a battery pack.

FIG. 2 is a schematic structural diagram of a battery 10 according to an embodiment of this application.

As shown in FIG. 2, the battery 10 includes a box 30 and a battery cell (not shown in the figure), where the battery cell 200 is accommodated in the box 30.

The box 30 may be a simple three-dimensional structure such as a cuboid structure or a cylindrical structure or a spherical structure, or may be a complex three-dimensional structure formed by combining simple three-dimensional structures such as a rectangular structure or a cylindrical structure or a spherical structure. This is not limited in the embodiments of this application. The box 30 may be made of an alloy material such as an aluminum alloy and an iron alloy, or may be made of a polymer material such as polycarbonate and polyisocyanurate foam, or may be made of a composite material produced from materials such as glass fiber and epoxy resin. This is not limited in the embodiments of this application either.

The box 30 is configured to accommodate the battery cells 200, and the box 30 may be a variety of structures. In some embodiments, the box 30 may include a first box portion 301 and a second box portion 302. The first box portion 301 and the second box portion 302 fit together to jointly define an accommodating space for accommodating the battery cells 200. The second box portion 302 may be a hollow structure with an opening at an end, the first box portion 301 is a plate-shaped structure, and the first box portion 301 is engaged with the opening side of the second box portion 302 so as to form the box 30 having the accommodating space. Alternatively, both the first box portion 301 and the second box portion 302 may be hollow structures with an opening at a side, and the opening side of the first box portion 301 is engaged with the opening side of the second box portion 302 so as to form the box 30 having the accommodating space. Certainly, the first box portion 301 and the second box portion 302 may be in various shapes, such as cylinder or cuboid.

In order to improve airtightness after connection of the first box portion 301 and the second box portion 302, a sealing member such as sealing gum and sealing ring may further be arranged between the first box portion 301 and the second box portion 302.

Assuming that the first box portion 301 fits on the top of the second box portion 302, the first box portion 301 may also be referred to as an upper cover, and the second box portion 302 may also be referred to as a lower box 30.

In the battery 10, the battery cell 200 may be provided in one or more. If a plurality of battery cells 200 are provided, the plurality of battery cells 200 may be connected in series, parallel, or series-parallel, where being connected in series-parallel means that the plurality of battery cells 200 are connected in both series and parallel. The plurality of battery cells 200 may be directly connected in series, parallel, or series-parallel, and then an entirety of the plurality of battery cells 200 is accommodated in the box 30; or certainly, the plurality of battery cells 200 may be connected in series, parallel, or series-parallel first to form a battery module 20, and then a plurality of battery modules 20 are connected in series, parallel, or series-parallel to form an entirety which is accommodated in the box 30.

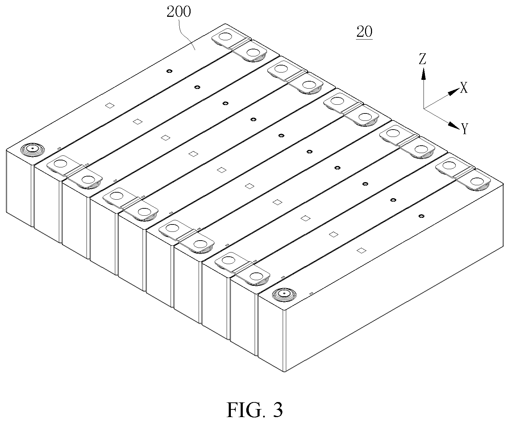

Referring to FIG. 2 and FIG. 3, FIG. 3 shows a schematic structural diagram of a battery module 20 according to an embodiment of this application.

In some embodiments, as shown in FIG. 2 and FIG. 3, there are a plurality of battery cells 200, and the plurality of battery cells 200 are connected in series, parallel, or series-parallel to form a battery module 20. The plurality of battery modules 20 are then connected in series, parallel, or series-parallel to form an entirety which is accommodated in the box 30.

The plurality of battery cells 200 in the battery module 20 may be electrically connected via a busbar, so that the plurality of battery cells 200 in the battery module 20 are connected in parallel, series, or series-parallel.

In this application, the battery cell 200 may include a lithium-ion battery cell 200, a sodium-ion battery cell 200, a magnesium-ion battery cell 200, or the like, and the embodiments of this application are not limited thereto. The battery cell 200 may be cylindrical, flat, cuboid, or in other shapes. This is not limited in the embodiments of this application either. The battery cells 200 are usually categorized into three types depending on their packaging: a cylindrical battery cell 200, a prismatic battery cell 200, and a pouch battery cell 200. This is not limited in the embodiments of this application either. However, for brevity of description, the following embodiments are all described by using a prismatic battery cell 200 as an example.

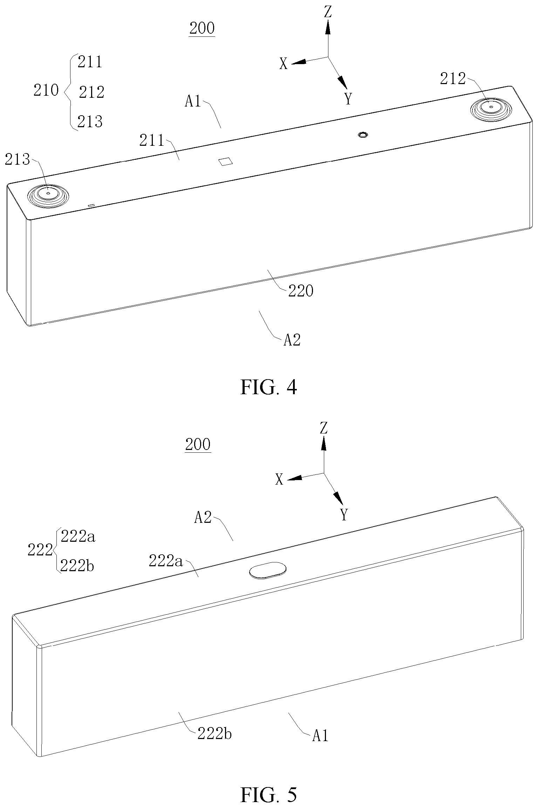

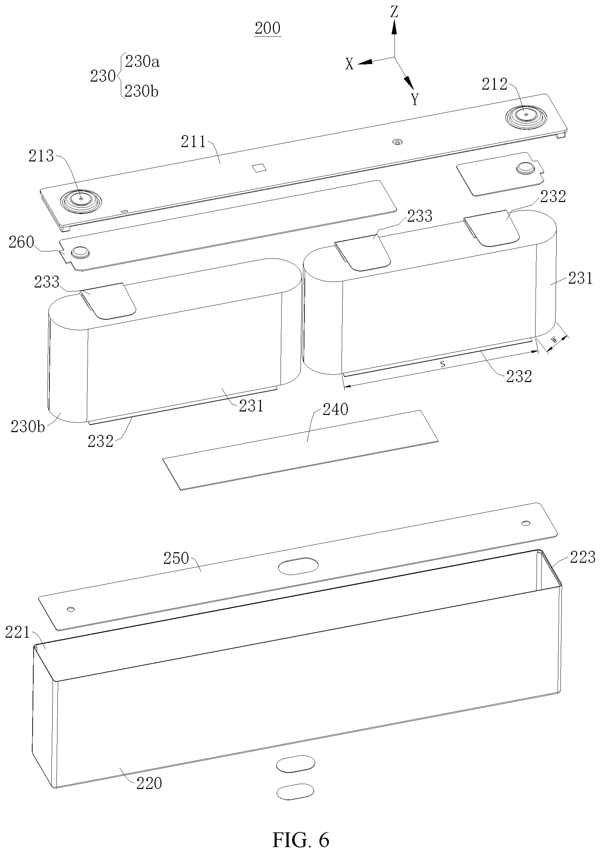

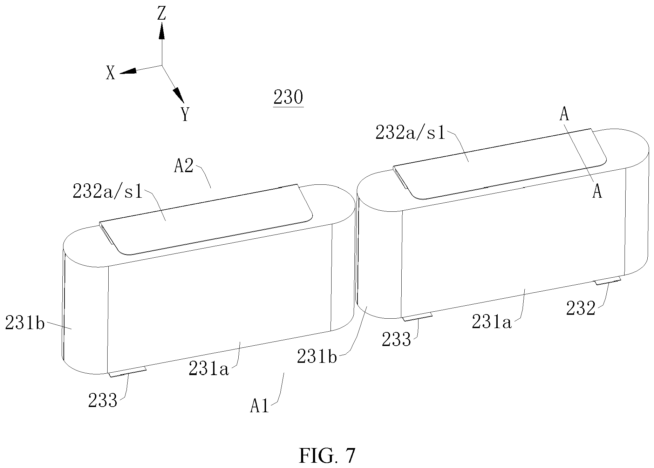

FIG. 4 is a schematic diagram of a three-dimensional structure of a battery cell 200 according to an embodiment of this application. FIG. 5 is a schematic diagram of a three-dimensional structure of a battery cell 200 according to an embodiment of this application from another perspective. The perspectives of FIG. 5 and FIG. 4 are opposite. FIG. 6 is a schematic structural exploded view of a battery cell 200 according to an embodiment of this application; and FIG. 7 is a schematic structural diagram of an electrode assembly 230 of a battery cell 200 according to an embodiment of this application from another perspective.

As shown in FIG. 4 and FIG. 7, the battery cell 200 includes: a shell 220, having an accommodating cavity 221; and at least two electrode assemblies 230, located in the accommodating cavity 221, where any one of the at least two electrode assemblies 230 includes a main body portion 231 and a first tab 232 and second tab 233 extending from the main body portion 231 and having opposite polarities. The battery cell 200 includes a first side A1 and a second side A2 oppositely arranged in a height direction Z of the battery cell 200, the at least two electrode assemblies 230 include a first electrode assembly 230a and a second electrode assembly 230b, the main body portion 231 of the first electrode assembly 230a has the first tab 232 and the second tab 233 extending from the first side A1 and the first tab 232 extending from the second side A2, the main body portion 231 of the second electrode assembly 230b has the second tab 233 extending from the first side A1 and the first tab 232 extending from the second side A2, and in the first electrode assembly 230a and the second electrode assembly 230b, the two second tabs 233 located on the first side A1 are electrically connected to each other, and the two first tabs 232 located on the second side A2 are electrically connected to each other.

The shell 220 is a component for forming an accommodating cavity 221 for accommodating the battery cell 200, where the formed accommodating cavity 221 can be configured to accommodate the electrode assemblies 230, electrolyte (not shown in the figure), and other components. Specifically, a shape of the shell 220 may be determined according to a specific shape and size of the electrode assembly 230. The shell 220 may be made of various materials, such as copper, iron, aluminum, stainless steel, aluminum alloy, and plastic, which are not particularly limited in the embodiments of this application.

The electrode assembly 230 is an assembly unit in which electrochemical reactions take place in the battery cell 200. The shell 220 may contain two or more electrode assemblies 230. The electrode assembly 230 is mainly formed by winding or stacking a positive electrode plate and a negative electrode plate, and a separator is typically arranged between the positive electrode plate and the negative electrode plate. Portions of the positive electrode plate and the negative electrode plate that have active materials form the main body portion 231 of the electrode assembly 230, and portions of the positive electrode plate and the negative electrode plate that have no active materials form the first tab 232 and the second tab 233, respectively. For example, the portion of the positive electrode plate that has no active materials forms the first tab 232, where the first tab 232 is a positive electrode tab; and the portion of the negative electrode plate that has no active materials forms the second tab 233, where the second tab 233 is a negative electrode tab. During charge and discharge of the battery 10, the positive electrode active material and the negative electrode active material react with the electrolyte, and the first tab 232 and the second tab 233 connect to electrode terminals to form a current loop.

The two second tabs 233 located on the first side A1 can be directly electrically connected to each other, to be specific, the two second tabs 233 located on the first side A1 can be connected to each other through contact, for example, through ultrasonic welding and/or laser welding to achieve direct connection. As the tabs themselves are made of conductive metal, electrical connection can be achieved after connection, in other words, current can flow from one second tab 233 to the other second tab 233. Alternatively, the two second tabs 233 located on the first side A1 can be electrically connected to each other through an adapter member, and the shape and material of the adapter member are not particularly limited, provided that the two second tabs 233 located on the first side A1 can conduct electricity and the two second tabs 233 can be electrically connected. Similarly, the two first tabs 232 located on the second side A2 can be connected through direct contact, or the two first tabs 232 located on the second side A2 can be electrically connected to each other through an adapter member, provided that the two first tabs 232 located on the second side A2 can conduct electricity and the two first tabs 232 can be electrically connected.

In the technical solutions of the embodiments of this application, the battery cell 200 includes the shell 220 and the electrode assemblies 230 located in the accommodating cavity 221 of the shell 220. The electrode assemblies 230 include the first electrode assembly 230a and the second electrode assembly 230b, and the first electrode assembly 230a and the second electrode assembly 230b each include the first tab 232 and the second tab 233. The two second tabs 233 located on the first side A1 are connected to each other, and the two first tabs 232 located on the second side A2 are connected to each other, so that the first electrode assembly 230a and the second electrode assembly 230b can be connected in parallel. Moreover, the connected first tabs 232 and the connected second tabs 233 are located on different sides of the electrode cell, which can simplify the structure of the battery cell 200, avoid the risk of short circuit between a component connecting the two first tabs 232 and a component connecting the two second tabs 233, and improve the safety performance of the battery cell 200.

The connected first tabs 232 and the connected second tabs 233 are located on different sides of the electrode cell, allowing the connected first tabs 232 and the connected second tabs 233 to dissipate heat from different sides of the battery cell 200, which can reduce the concentration of heat in the battery cell 200, effectively improving the heat dissipation performance of the battery cell 200 and enhancing the safety performance of the battery cell 200.

In addition, the two first tabs 232 located on the second side A2 can communicate with the first tabs 232 of the first electrode assembly 230a that are located on the first side A1, so that the first tab 232 and the second tab 233 with opposite polarities on the battery cell 200 can be led out from the first side A1 of the battery cell 200, simplifying the wiring of the battery cell 200.

Optionally, still referring to FIG. 4 to FIG. 6, the battery cell 200 further includes an end cover assembly 210, where the end cover assembly 210 is a component that covers the opening of the shell 220 to separate the internal environment of the battery cell 200 from the external environment. Without limitation, a shape of the end cover assembly 210 may be adapted to a shape of the shell 220 to fit the shell 220. Optionally, the end cover assembly 210 may be made of a material with certain hardness and strength (for example, aluminum alloy), so that the end cover assembly 210 is less likely to deform when subjected to extrusion and collision, allowing the battery cell 200 to have higher structural strength and enhanced safety performance. The end cover assembly 210 may be provided with functional components such as electrode terminals. The electrode terminal may be configured to be electrically connected to the electrode assembly 230 for outputting or inputting electrical energy of the battery cell 200. In some embodiments, the end cover assembly 210 may be further provided with a pressure relief mechanism for releasing internal pressure when the internal pressure or a temperature of the battery cell 200 reaches a threshold. The end cover assembly 210 may alternatively be made of various materials, such as copper, iron, aluminum, stainless steel, aluminum alloy, and plastic, which are not particularly limited in the embodiments of this application

In some embodiments, an insulating member may further be arranged at an inner side of the end cover assembly 210. The insulating member may be configured to separate an electrically connected component in the shell 220 from the end cover assembly 210 to reduce a risk of short circuit. For example, the insulating member may be made of plastic, rubber, or the like.

The shell 220 and the end cover assembly 210 may be independent components, an opening 223 may be arranged on the shell 220, and the end cover assembly 210 covers the opening 223 at the opening 223 to form the internal environment of the battery cell 200. Without limitation, the end cover assembly 210 and the shell 220 may alternatively be integrated. Specifically, the end cover assembly 210 and the shell 220 may form a shared connection surface before other components are arranged in the shell, and then the end cover assembly 210 covers the shell 220 when inside of the shell 220 needs to be enclosed. The shell 220 may be in various shapes and sizes, such as a cuboid shape, a cylindrical shape, and a hexagonal prism shape.

Still referring to FIG. 4 to FIG. 6, in some embodiments, the shell 220 further includes a wall portion 222, where the wall portion 222 encloses the accommodating cavity 221 and an opening 223 communicating with the accommodating cavity 221 and located at least on the first side A1. The end cover assembly 210 is configured to close the opening 223, and the end cover assembly 210 includes an end cover body 211 and a first electrode terminal 212 and second electrode terminal 213 arranged on the end cover body 211 and having opposite polarities, where the first electrode terminal 212 is electrically connected to the first tab 232 located on the first side A1, and the second electrode terminal 213 is electrically connected to at least one of the two second tabs 233.

In some embodiments, the first electrode terminal 212 is directly ultrasonically welded and/or laser welded to the first tab 232 located on the first side A1 to achieve electrical connection, in other words, current can flow from the first tab 232 to the first electrode terminal 212.

In some embodiments, the first electrode terminal 212 is indirectly electrically connected to the first tab 232 located on the first side A1 through a conductive adapter member.

In some embodiments, the second electrode terminal 213 is ultrasonically welded and/or laser welded to one of the two second tabs 233 to achieve electrical connection.

In some embodiments, the second electrode terminal 213 is indirectly electrically connected to the two second tabs 233 through a conductive adapter member.

According to the embodiments of this application, the first electrode terminal 212 and the second electrode terminal 213 are arranged on the end cover assembly 210, so that the first electrode terminal 212 is connected to the first tab 232 to lead out the first tab 232, and the second electrode terminal 213 is connected to the second tab 233 to lead out the second tab 233. Moreover, the opening 223 is located on the first side A1, that is, the end cover assembly 210 covering the opening 223 is located on the first side A1, which can reduce the distance between the first tab 232 and the first electrode terminal 212 on the first side A1, and the distance between the second tab 233 and the second electrode terminal 213.

Optionally, the battery cell 200 further has a width direction X and a thickness direction Y, where the width direction X, the height direction Z, and the thickness direction Y are mutually perpendicular. A plane where the end cover assembly 210 is located is parallel to a plane formed by the thickness direction Y and the width direction X.

In some embodiments, still referring to FIG. 4 to FIG. 7, the wall portion 222 includes a bottom 222a arranged opposite the opening 223, and at least part of at least one of the first tabs 232 located on the second side A2 directly or indirectly abuts against the bottom 222a.

According to the embodiments of this application, the first tab 232 directly or indirectly abuts against the bottom 222a, so that the first tab 232 can be reused as a heat dissipation tab, which can allow the heat on the first tab 232 to be transferred to the bottom 222a, thereby improving the heat dissipation capability of the battery cell 200.

Optionally, at least one of the two first tabs 232 located on the second side A2 can abut against the bottom 222a through direct contact, or at least one of the first tabs 232 can indirectly abut against the bottom 222a, provided that the heat of the first tab 232 can be transferred to the bottom 222a.

Optionally, the bottom 222a can be provided with a pressure relief mechanism for releasing internal pressure when the internal pressure or a temperature of the battery cell 200 reaches a threshold.

Optionally, still referring to FIG. 5, a plane where the bottom 222a is located is parallel to a plane formed by the thickness direction Y and the width direction X. Optionally, the wall portion 222 further includes a side portion 222b extending in the height direction Z, connected to the periphery of the bottom 222a, and enclosing the opening 223. The bottom 222a and the side portion 222b are integrally formed so as to improve the structural strength of the shell 220.

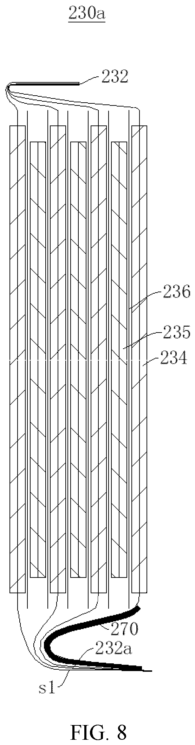

FIG. 8 is a cross-sectional view of a first electrode assembly of a battery cell according to an embodiment of this application along line A-A in FIG. 7.

In some embodiments, as shown in FIG. 6 to FIG. 8, at least one of the two first tabs 232 located on the second side A2 is bent to form an abutment portion 232a, and a surface of the abutment portion 232a facing the bottom 222a is a mating surface s1 abutting against the bottom 222a.

According to the embodiments of this application, the mating surface s1 is formed on the abutment portion 232a of the first tab 232, so that a heat dissipation area of the first tab 232 can be increased, which in turn accelerates a heat transfer rate between the first tab 232 and the bottom 222a, and further improves the heat dissipation capability of the battery cell 200.

Optionally, a support portion 270 can be arranged inside the bent first tab 232 so as to improve the deformation of the first tab 232.

Optionally, as described above, the mating surface s1 may directly abut against the bottom 222a, or the mating surface s1 may indirectly abut against the bottom 222a.

Optionally, the mating surface s 1 is arranged parallel to a surface of the bottom 222a facing the opening 223 so as to further increase a contact area between the first tab 232 and the bottom 222a.

In some embodiments, as shown in FIG. 6, the battery cell 200 further includes a first adapter member 240, where the two first tabs 232 located on the second side A2 are electrically connected to each other through the first adapter member 240.

According to the embodiments of this application, the first adapter member 240 is arranged, so that the two first tabs 232 located on the second side A2 can be connected, and the heat of the two first tabs 232 can be transferred to the first adapter member 240.

Optionally, the first adapter member 240 may be plate-shaped to increase a contact area between the first tab 232 and the first adapter member 240 and to enhance the stability of the connection between the first tab 232 and the first adapter member 240. Optionally, when the first tab 232 is bent, the first adapter member 240 may be arranged inside the first tab 232, or the first adapter member 240 may be arranged on a side of the first tab 232 facing the bottom 222a.

In some embodiments, the first adapter member 240 is located between the two first tabs 232 located on the second side A2 and the bottom 222a, so that the mating surface s 1 abuts against the bottom 222a through the first adapter member 240.

According to the embodiments of this application, the mating surface s1 abuts against the bottom 222a through the first adapter member 240, so that heat can be transferred from the first tab 232 to the bottom 222a through the first adapter member 240. Moreover, the first adapter member 240 connects the two first tabs 232, so that the heat of the two first tabs 232 can be transferred to the bottom 222a through the first adapter member 240, which can further improve the heat dissipation capability of the battery cell 200.

Optionally, the first adapter member 240 and the bottom 222a can directly abut against each other or indirectly abut against each other.

Optionally, orthographic projections of the two first tabs 232 located on the second side A2 in the height direction Z are located within an orthographic projection of the first adapter member 240 in the height direction Z to increase a contact area between the first adapter member 240 and the two first tabs 232.

Optionally, a size of the first adapter member 240 matches a size of the bottom 222a. The first adapter member 240 has a relatively large size, which can increase the contact area between the first adapter member 240 and the two first tabs 232 located on the second side A2, enhance the stability of relative positions of the first adapter member 240 and the first tabs 232, and increase the current-flow capacity of the first adapter member 240; and can also increase the abutment area between the first adapter member 240 and the bottom 222a, and accelerate the heat dissipation of the first tab 232.

In some embodiments, as shown in FIG. 5 and FIG. 6, an insulating heat-conducting plate 250 is provided on a side of the bottom 222a facing the accommodating cavity 221, and at least part of the insulating heat-conducting plate 250 is located between the first adapter member 240 and the bottom 222a to achieve heat conduction between the first adapter member 240 and the bottom 222a.

According to the embodiments of this application, the insulating heat-conducting plate 250 is arranged, which can increase the heat transfer rate between the first adapter member 240 and the bottom 222a and improve the heat dissipation capability of the battery cell 200.

Optionally, a size of the insulating heat-conducting plate 250 matches a size of the bottom 222a so as to improve heat dissipation capability.

Optionally, the insulating heat-conducting plate 250 has a thermal conductivity greater than that of the separator, which allows the insulating heat-conducting plate 250 to conduct heat more quickly.

In some embodiments, the insulating heat-conducting plate 250 and the first adapter member 240 are bonded to each other using an insulating heat-conducting adhesive. Provision of the insulating heat-conducting adhesive can ensure the stability of relative positions of the insulating heat-conducting plate 250 and the first adapter member 240.

In some embodiments, the insulating heat-conducting plate 250 and the bottom 222a are bonded to each other using an insulating heat-conducting adhesive. Provision of the insulating heat-conducting adhesive can ensure the stability of relative positions of the insulating heat-conducting plate 250 and the bottom 222a.

In some embodiments, as shown in FIG. 6 and FIG. 7, the main body portion 231 of the first electrode assembly 230a and the main body portion 231 of the second electrode assembly 230b each include two first surfaces 231a oppositely arranged and second surfaces 231b connecting the two first surfaces 231a and oppositely arranged, where an area of the first surface 231a is greater than an area of the second surface 231b, and the first electrode assembly 230a and the second electrode assembly 230b are arranged side by side with the second surfaces 231b oppositely arranged. To be specific, sizes of orthographic projections of the first electrode assembly 230a and the second electrode assembly 230b in the width direction are smaller than sizes of their respective orthographic projections in the thickness direction, and the first electrode assembly 230a and the second electrode assembly 230b are arranged side by side in the width direction.

According to these embodiments of this application, the first electrode assembly 230a and the second electrode assembly 230b are arranged side by side with the smaller second surfaces 231b, so that the first surfaces 231a are not obstructed by other electrode assemblies 230, and the heat of the electrode assemblies 230 can be dissipated through the first surfaces 231a. Moreover, the first surfaces 231a have a larger area, which can improve the heat dissipation capability of the electrode assemblies 230.

Optionally, the two first surfaces 231a can be arranged opposite each other in the thickness direction Y, the two second surfaces 231b can be arranged opposite each other in the width direction X, and planes where the first surfaces 231a are located are parallel to a plane defined by the height direction Z and the width direction X. The second surfaces 231b may be curved or flat surfaces. When the second surfaces 231b are flat surfaces, planes where the second surfaces 231b are located are parallel to a plane defined by the height direction Z and the thickness direction Y.

In some embodiments, as shown in FIG. 6 and FIG. 7, in the first tab 232 and the second tab 233 of the first electrode assembly 230a that are located on the first side A1, the second tab 233 is arranged on a side of the first tab 232 facing the second electrode assembly 230b.

According to these embodiments of this application, the second tab 233 of the first electrode assembly 230a is arranged close to the second electrode assembly 230b, so that a distance between the two second tabs 233 located on the first side A1 is short, facilitating the connection of the two second tabs 233.

Optionally, as shown in FIG. 6, the battery cell 200 further includes a second adapter member 260, where the second adapter member 260 is configured to connect the two second tabs 233 located on the first side A1. Optionally, an extension size of the second adapter member 260 in the thickness direction Y is the same as an extension size of the main body portion 231 of the first electrode assembly 230a in the thickness direction Y. This makes a size of the second adapter member 260 relatively large, which can increase a contact area between the second tabs 233 and the second adapter member 260.

Optionally, the orthographic projections of the two second tabs 233 located on the first side A1 in the height direction Z are located within an orthographic projection of the second adapter member 260 in the height direction Z to increase the contact area between the second adapter member 260 and the two second tabs 233.

In some embodiments, as shown in FIG. 6 to FIG. 8, the first electrode assembly 230a and the second electrode assembly 230b are electrode assemblies 230 formed through winding and each include a straight region Q and a bending region W. In the two first tabs 232 located on the second side A2, the first tab 232 of the first electrode assembly 230a is located in the straight region Q of the first electrode assembly 230a, and/or the first tab 232 of the second electrode assembly 230b is located in the straight region Q of the second electrode assembly 230b.

According to these embodiments of this application, when the first tab(s) 232 on the second side A2 is/are located in the straight region Q of the first electrode assembly 230a and/or second electrode assembly 230b, the shape of the first tab 232 can be ensured to be regular. In addition, when the first tab 232 is bent to form the abutment portion 232a, the difficulty of bending the first tab 232 can be reduced.

Optionally, when the electrode assembly 230 is a wound electrode, the electrode assembly 230 is formed by winding the positive electrode plate, the negative electrode plate, and the separator 236. The straight region Q of the electrode assembly 230 is a region where the positive electrode plate, the negative electrode plate, and the separator 236 are straight, and the bending region W of the electrode assembly 230 is a region where the positive electrode plate, the negative electrode plate, and the separator 236 are bent due to winding.

In some embodiments, as shown in FIG. 6 to FIG. 8, in the two first tabs 232 located on the second side A2, width L1 of the first tab 232 of the first electrode assembly 230a and width L2 of the straight region Q of the first electrode assembly 230a satisfy 5 mm≤L2-L1≤10 mm; and/or width L3 of the first tab 232 of the second electrode assembly 230b and width L4 of the straight region Q of the second electrode assembly 230b satisfy 5 mm≤L4-L3≤10 mm.

During preparation of the wound electrode assembly 230, a portion of the electrode plate that is coated with no active material extends to serve as a tab slice. A plurality of tab slices extend on a side of the electrode plate, and are spaced apart from each other along the length direction of the electrode plate. During winding of the electrode plate, the plurality of tab slices are stacked to form a complete first tab 232 or second tab 233. During winding of the electrode plate, there may be process errors, resulting in misalignment of the stacked tab slices.

According to these embodiments of this application, when the width L1 of the first tab 232 and the width L2 of the straight region Q of the first electrode assembly 230a satisfy 5 mm≤L2-L1≤10 mm, even if the first tab 232 is offset due to process errors, it can still be ensured that the first tab 232 is located in the straight region Q of the first electrode assembly 230a. Similarly, when the width L3 of the second tab 233 and the width L4 of the straight region Q of the second electrode assembly 230b satisfy 5 mm≤L4-L3≤10 mm, even if the second tab 233 is offset due to process errors, the second tab 233 can still be located in the straight region Q of the second electrode assembly 230b.

In some embodiments, the first electrode assembly 230a and the second electrode assembly 230b are both laminated electrode assemblies 230. In the two first tabs 232 located on the second side A2, width L5 of the first tab 232 of the first electrode assembly 230a and width L6 of the first electrode assembly 230a satisfy 0≤L6-L5≤10 mm; and/or width L7 of the first tab 232 of the second electrode assembly 230b and width L8 of the second electrode assembly 230b satisfy 0≤L8-L6≤10 mm.

During preparation of the laminated electrode assembly 230, a portion of each electrode plate that is coated with no active material extends to serve as a tab slice. When a plurality of electrode plates are stacked, a plurality of tab slices are stacked to form the first tab 232 or the second tab 233 of the electrode assembly 230. When a plurality of electrode plates are stacked, the tab slices may be misaligned.

According to these embodiments of this application, when L5 and L6 satisfy the foregoing ranges, even if the plurality of tab slices are misaligned due to process errors, it can still be ensured that the first tab 232 does not protrude from an overlapping region of the plurality of tab slices.

In some embodiments, the second electrode assembly 230b is provided in plurality, the second tabs 233 of all the second electrode assemblies 230b are located on the first side A1 and electrically connected to the second tab 233 of the first electrode assembly 230a, and the first tabs 232 of all the second electrode assemblies 230b are located on the second side A2 and electrically connected to the first tab 232 located on the first side A1 of the first electrode assembly 230a.

According to these embodiments of this application, the plurality of second electrode assemblies 230b are arranged, which can increase the capacity of the battery cell 200. The second tabs 233 of all the second electrode assemblies 230b are connected to the second tabs 233 of the first electrode assembly 230a, and the first tabs 232 on the first side A1 are connected to each other, so that the plurality of second electrode assemblies 230b can be connected in parallel with the first electrode assembly 230a.

Optionally, the first electrode assembly 230a and the plurality of second electrode assemblies 230b are arranged side by side in the width direction X, in other words, the first surfaces 231a of the first electrode assembly 230a and the plurality of second electrode assemblies 230b are not obstructed by any other electrode assemblies 230, which can improve the heat dissipation capability of the electrode assemblies 230.

In some embodiments, in the two first tabs 232 located on the second side A2, an orthographic projection of the first tab 232 of the first electrode assembly 230a in the height direction Z is located within an orthographic projection of the main body portion 231 of the first electrode assembly 230a in the height direction Z, and an orthographic projection of the first tab 232 of the second electrode assembly 230b in the height direction Z is located within an orthographic projection of the main body portion 231 of the second electrode assembly 230b in the height direction Z.

In these embodiments of this application, the first tab 232 of the first electrode assembly 230a located on the second side A2 does not protrude from a body of the first electrode assembly 230a, and the first tab 232 of the second electrode assembly 230b does not protrude from a body of the second electrode assembly 230b, which can prevent the first tab 232 from scraping an inner wall surface of the shell 220 facing the accommodating cavity 221.

In some embodiments, as shown in FIG. 6 to FIG. 8, the first electrode assembly 230a and the second electrode assembly 230b each include a first electrode plate 234, a second electrode plate 235, and a separator 236 arranged between the first electrode plate 234 and the second electrode plate 235, and in the first electrode assembly 230a and/or the second electrode assembly 230b, the first tab 232 extends from the first electrode plate 234 and beyond the separator 236, and the second tab 233 extends from the second electrode plate 235 and beyond the separator 236.

According to these embodiments of this application, the first tab 232 extends beyond the separator 236, and when the first tab 232 includes a plurality of layers of tab slices, the stability of electrical connection between the plurality of layers of tab slices can be ensured. Similarly, the second tab 233 extends beyond the separator 236, and when the second tab 233 includes a plurality of layers of tab slices, the stability of electrical connection between a plurality of layers of tab slices can be ensured.

Optionally, the first electrode plate 234 is, for example, a positive electrode plate, and the first tab 232 is a positive electrode tab. The second electrode plate 235 is, for example, a negative electrode plate, and the second tab 233 is a negative electrode tab.

According to some embodiments of this application, this application further provides a battery 10 including the battery cell 200 according to any one of the foregoing solutions.

According to some embodiments of this application, this application further provides an electric apparatus including the battery 10 according to any one of the foregoing solutions, and the battery 10 is configured to supply electrical energy to the electric apparatus.

The electric apparatus may be any one of the foregoing devices or systems using a battery 10.

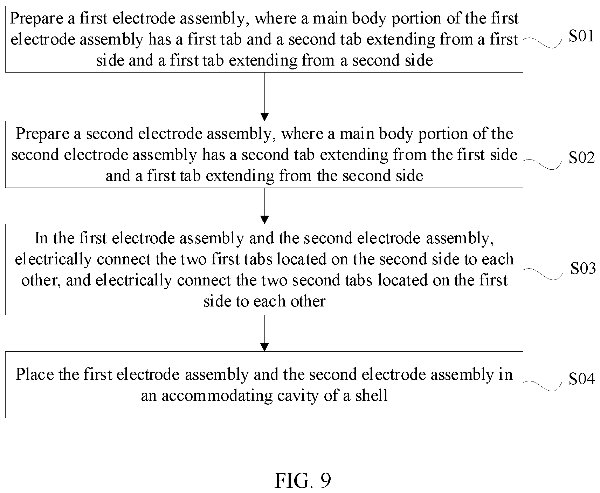

Referring to FIG. 9, FIG. 9 is a schematic flowchart of a manufacturing method of battery cell according to an embodiment of this application.

According to some embodiments of this application, this application further provides a manufacturing method of battery cell, where the battery cell may be the battery cell shown in FIG. 4 to FIG. 8. Referring to FIG. 4 to FIG. 9 together, the manufacturing method of battery cell according to this embodiment of this application includes the following steps.

Step S01: Prepare a first electrode assembly 230a, where a main body portion 231 of the first electrode assembly 230a has a first tab 232 and a second tab 233 extending from a first side A1 and a first tab 232 extending from a second side A2.

Step S02: Prepare a second electrode assembly 230b, where a main body portion 231 of the second electrode assembly 230b has a second tab 233 extending from the first side A1 and a first tab 232 extending from the second side A2.

Step S03: In the first electrode assembly 230a and the second electrode assembly 230b, electrically connect the two first tabs 232 located on the second side A2 to each other, and electrically connect the two second tabs 233 located on the first side A1 to each other.

Step S04: Place the first electrode assembly 230a and the second electrode assembly 230b in the accommodating cavity 221 of the shell 220.

In the preparation method provided in this embodiment of this application, the first electrode assembly 230a is first prepared. The first tab 232 and the second tab 233 with different polarities extend from the first side A1, the first tab 232 extends from the second side A2, and the first tab 232 on the second side A2 communicates with the first tab 232 on the first side A1. The second electrode assembly 230b is then prepared. In the second electrode assembly 230b, the second tab 233 extends from the first side A1, and the first tab 232 extends from the second side A2. Next, in step S03, the two first tabs 232 located on the second side A2 are connected, and the two second tabs 233 located on the first side A1 are connected, so that the first electrode assembly 230a and the second electrode assembly 230b can be connected in parallel. In step S03, different tabs are connected on different sides, which can simplify the connection of the tabs and simplify the structure of the battery cell 200, avoid the risk of short circuit between a component connecting the two first tabs 232 and a component connecting the two second tabs 233, and improve the safety performance of the battery cell 200.

In addition, the two first tabs 232 located on the second side A2 can communicate with the first tab 232 located on the first side A1 of the first electrode assembly 230a, so that the first tab 232 and the second tab 233 with opposite polarities on the battery cell 200 can be led out from the first side A1 of the battery cell 200, which can simplify the wiring of the battery cell 200.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A battery cell, comprising:
a shell, having an accommodating cavity; and
at least two electrode assemblies, located in the accommodating cavity, wherein any one of the at least two electrode assemblies comprises a main body portion and a first tab and second tab extending from the main body portion and having opposite polarities;
wherein the battery cell comprises a first side and a second side oppositely arranged in a height direction of the battery cell, the at least two electrode assemblies comprise a first electrode assembly and a second electrode assembly, the main body portion of the first electrode assembly has the first tab and the second tab extending from the first side and the first tab extending from the second side, the main body portion of the second electrode assembly has the second tab extending from the first side and the first tab extending from the second side, and in the first electrode assembly and the second electrode assembly, the two second tabs located on the first side are electrically connected to each other, and the two first tabs located on the second side are electrically connected to each other.

2. The battery cell according to claim 1, wherein
the shell further comprises a wall portion, wherein the wall portion encloses the accommodating cavity and an opening communicating with the accommodating cavity and located at least on the first side; and
the battery cell further comprises an end cover assembly for closing the opening, wherein the end cover assembly comprises an end cover body and a first electrode terminal and second electrode terminal arranged on the end cover body and having opposite polarities, the first electrode terminal being configured to be electrically connected to the first tab located on the first side, and the second electrode terminal being configured to be electrically connected to at least one of the two second tabs.

3. The battery cell according to claim 2, wherein the wall portion comprises a bottom arranged opposite the opening, and at least part of at least one of the first tabs located on the second side directly or indirectly abuts against the bottom.

4. The battery cell according to claim 3, wherein at least one of the two first tabs located on the second side is bent to form an abutment portion, and a surface of the abutment portion facing the bottom is a mating surface abutting against the bottom.

5. The battery cell according to claim 4, further comprising a first adapter member, wherein the two first tabs located on the second side are electrically connected to each other through the first adapter member.

6. The battery cell according to claim 5, wherein the first adapter member is located between the two first tabs located on the second side and the bottom, so that the mating surface abuts against the bottom through the first adapter member.

7. The battery cell according to claim 6, wherein an insulating heat-conducting plate is provided on a side of the bottom facing the accommodating cavity, and at least part of the insulating heat-conducting plate is located between the first adapter member and the bottom so as to achieve heat conduction between the first adapter member and the bottom.

8. The battery cell according to claim 7, wherein the insulating heat-conducting plate and the first adapter member are bonded to each other using an insulating heat-conducting adhesive; and/or the insulating heat-conducting plate and the bottom are bonded to each other using an insulating heat-conducting adhesive.

9. The battery cell according to any one of claims 1 to 8, wherein the main body portion of the first electrode assembly and the main body portion of the second electrode assembly each comprise two first surfaces oppositely arranged and second surfaces connecting the two first surfaces and oppositely arranged, an area of the first surface is greater than an area of the second surface, and the first electrode assembly and the second electrode assembly are arranged side by side with the second surfaces oppositely arranged.

10. The battery cell according to claim 9, wherein
in the first tab and the second tab of the first electrode assembly that are located on the first side, the second tab is arranged on a side of the first tab facing the second electrode assembly.

11. The battery cell according to any one of claims 1 to 10, wherein the first electrode assembly and the second electrode assembly are electrode assemblies formed through winding and each comprise a straight region and a bending region, and in the two first tabs located on the second side, the first tab of the first electrode assembly is located in the straight region of the first electrode assembly, and/or the first tab of the second electrode assembly is located in the straight region of the second electrode assembly.

12. The battery cell according to claim 11, wherein in the two first tabs located on the second side, width L1 of the first tab of the first electrode assembly and width L2 of the straight region of the first electrode assembly satisfy 5 mm≤L2-L1≤10 mm; and/or width L3 of the first tab of the second electrode assembly and width L4 of the straight region of the second electrode assembly satisfy 5 mm≤L4-L3≤10 mm.

13. The battery cell according to any one of claims 11 and 12, wherein the first electrode assembly and the second electrode assembly are both laminated electrode assemblies, and in the two first tabs located on the second side, width L5 of the first tab of the first electrode assembly and width L6 of the first electrode assembly satisfy 0≤L6-L5≤10 mm; and/or width L7 of the first tab of the second electrode assembly and width L8 of the second electrode assembly satisfy 0≤L8-L6<10 mm.

14. The battery cell according to any one of claims 1 to 13, wherein the second electrode assembly is provided in plurality, the second tabs of all the second electrode assemblies are located on the first side and electrically connected to the second tabs of the first electrode assembly, and the first tabs of all the second electrode assemblies are located on the second side and electrically connected to the first tabs of the first electrode assembly that are located on the first side.

15. The battery cell according to any one of claims 1 to 14, wherein in the two first tabs located on the second side, an orthographic projection of the first tab of the first electrode assembly in the height direction is located within an orthographic projection of the main body portion of the first electrode assembly in the height direction, and an orthographic projection the first tab of the second electrode assembly in the height direction is located within an orthographic projection of the main body portion of the second electrode assembly in the height direction.

16. The battery cell according to any one of claims 1 to 15, wherein the first electrode assembly and the second electrode assembly each comprise a first electrode plate, a second electrode plate, and a separator arranged between the first electrode plate and the second electrode plate, and in the first electrode assembly and/or the second electrode assembly, in the height direction, the first tab extends from the first electrode plate and beyond the separator, and the second tab extends from the second electrode plate and beyond the separator.

17. A battery, comprising the battery cell according to any one of claims 1 to 16.

18. An electric apparatus, wherein the electric apparatus comprises the battery according to claim 17, and the battery is configured to supply electrical energy.

19. A manufacturing method of the battery cell according to any one of claims 1 to 16, comprising:
preparing the first electrode assembly, wherein the main body portion of the first electrode assembly has the first tab and the second tab extending from the first side and the first tab extending from the second side;
preparing the second electrode assembly, wherein the main body portion of the second electrode assembly has the second tab extending from the first side and the first tab extending from the second side;
in the first electrode assembly and the second electrode assembly, electrically connecting the two first tabs located on the second side to each other, and electrically connecting the two second tabs located on the first side to each other; and
placing the first electrode assembly and the second electrode assembly in the accommodating cavity of the shell.
